# EUROPEAN PATENT APPLICATION

(11) **EP 4 579 818 A1**
(43) Date of publication of application: **02.07.2025**
(21) Application number: 23881477.6
(22) Date of filing: 06.09.2023
(51) Int. Cl.: H01M 4/62, C09J 9/02

(54) **BATTERY ADHESIVE, PREPARATION METHOD THEREFOR, AND LITHIUM-ION BATTERY**

(30) Priority: 27.10.2022 CN 202211328138
(71) Applicant: Shenzhen Yanyi New Materials Co., Ltd., Shenzhen, Guangdong 518110 (CN)
(72) Inventor: YUE, Min, Shenzhen, Guangdong 518110 (CN); ZHOU, Zhuxin, Shenzhen, Guangdong 518110 (CN); LIU, Linsheng, Shenzhen, Guangdong 518110 (CN); WANG, Luhai, Shenzhen, Guangdong 518110 (CN); QIAN, Chao, Shenzhen, Guangdong 518110 (CN)
(74) Representative: Dantz, Jan Henning
(86) International application number: PCT/CN2023/117217
(87) International publication number: WO 2024/087896

(57) **Abstract**

A battery adhesive, a preparation method therefor, and a lithium-ion battery. The battery adhesive comprises the following components in parts by weight: 70-90 parts of a first component and 10-30 parts of a second component; wherein the preparation raw materials of the first component comprise isocyanate, a first monomer, and a second monomer; the first monomer is selected from an aromatic dihydric phenol and/or an aromatic diamine; the second monomer is a reactive long carbon chain polymer; and the second component is an acrylonitrile copolymer. The battery adhesive has a relatively low swelling rate and relatively strong bonding capabilities in an electrolyte, resulting in better electrical performance in a prepared lithium ion battery.

## Description

### TECHNICAL FIELD

The present application relates to the technical field of binders and particularly relates to a battery binder, a preparation method therefor, and a lithium-ion battery.

### TECHNICAL BACKGROUND

With the improvement of the standard of living, portable electronic devices and high-power electric vehicles have become increasingly prevalent in people's daily lives and work, and thereby the demand for secondary batteries for powering these products has been increasing. At the same time, the increasingly complex operating environments of various products have posed higher requirements on the performance of secondary batteries. Developing secondary batteries with high energy density, high safety, and high capacity retention is a key trend for the future of energy storage systems.

Lithium-ion batteries, as a leading type of secondary battery, are widely used thanks to their low self-discharge, excellent cycle performance, and light weight. Among the various components of lithium-ion batteries, the binder accounts for a small proportion and is a non-active material. However, it plays an important role in integrating active materials, the conductive agent, the current collector, etc., to form a cohesive structure. Binders are essential for ensuring the mechanical and processing properties of electrode plates, as well as maintaining the integrity of the conductive network during charge-discharge cycles. Currently, the most widely used binder in lithium-ion batteries is the fluororesin represented by polyvinylidene fluoride (PVDF). However, the starting material monomer of such a fluorine-containing material is a fluorine-containing hydrocarbon compound, which can damage the earth's ozone layer, and thus the production of PVDF is strictly controlled. In addition, the binding strength of PVDF mainly relies on weak van der Waals forces at the interface, which are insufficient to effectively maintain the integrity of the electrode structure. Besides, PVDF tends to swell significantly in the electrolyte. During prolonged cycling and high-temperature operation, this can lead to delamination at the electrode interface, causing electrode collapse and compromising battery safety. Thus, PVDF is increasingly unable to meet the demands of the rapidly developing new energy technologies for binders.

Therefore, developing a binder that has a low swelling rate in electrolytes and a strong binding strength, and can maintain a stable electrode plate structure under extreme operating conditions, has become an urgent technical challenge.

### SUMMARY OF THE INVENTION

The following is a summary of the subject matters in detail, which, however, is not intended to limit the claimed scope.

The present application aims to provide a battery binder, a preparation method therefor, and a lithium-ion battery. In the present application, by designing the composition of the battery binder, the prepared battery binder has a low swelling rate and a strong binding capability in the electrolyte, such that the battery can keep a good electrode plate structure in an extreme using environment. As such, the prepared lithium-ion battery has small battery cell bounce after long-term charging and discharging and has a high capacity retention rate and good cycle performance and use safety. Meanwhile, the battery binder provided by the present application can be prepared with a simple method and under mild conditions and thus is suitable for large-scale industrial production.

In a first aspect, the present application provides a battery binder, which comprises the following components in parts by weight: 70 to 90 parts of a first component and 10 to 30 parts of a second component;
starting materials for preparing the first component comprise isocyanate, a first monomer, and a second monomer;
the first monomer is selected from an aromatic dihydric phenol and/or an aromatic diamine; the second monomer is a reactive long carbon chain polymer;
the second component is an acrylonitrile copolymer.

In the present application, by designing the composition of the battery binder, the prepared battery binder has a low swelling rate and a strong binding capability in the electrolyte, such that the battery can keep a good electrode plate structure in an extreme using environment. As such, the prepared lithium-ion battery has small battery cell bounce after long-term charging and discharging and has a high capacity retention rate and good cycle performance and use safety.

In the present application, selecting the aromatic dihydric phenol and/or the aromatic diamine as the first monomer can, in one aspect, allow the battery binder provided by the present application to have good mechanical property; it can, in another aspect, allow for the acquisition of a battery binder with better electrolyte resistance since the intrusion of electrolyte is prevented as the use of the aromatic ring as the backbone reduces the flexibility of the molecular chain and makes the molecular chain segments more difficult to move.

In the present application, the reactive long carbon chain polymer refers to a long carbon chain polymer having a reactive terminal group (e.g., amino, hydroxyl, carboxyl, epoxy, etc.). The reactive long carbon chain polymer has a long carbon chain segment with low polarity, has small interaction with the electrolyte containing strong polar molecules, and can effectively resist the intrusion of the electrolyte, thereby improving the electrolyte resistance of the battery binder. The reactive groups at the two terminals of the reactive long carbon chain polymer can ensure the chain growth capacity of the polymer, are beneficial to improving the molecular weight of the first component, increase the winding of the polymer chain, and hinder the intrusion of the electrolyte, thereby obtaining a battery binder with better electrolyte resistance.

In the present application, the acrylonitrile copolymer is used, such that cyano can be introduced into the battery binder, and the binding property of the battery binder and the current collector is further enhanced through the strong interaction of the cyano and hydroxyl on the surface of the current collector, thereby being beneficial to maintaining the stability of the electrode plate structure of the battery in an extreme using environment.

Meanwhile, in the present application, by controlling the content of the first component and the second component to be within a specific range, the prepared battery binder has a low swelling rate and a high binding capability. If the content of the second component is too large, the viscosity of the prepared battery binder slurry is unstable, and even gelation may occur; if the amount of the second component added is too small, the adhesion of the prepared battery binder is low. By adding the second component containing the binary or polynary acrylonitrile copolymer at the proportion described above, the strong interaction between the cyano group in the acrylonitrile structure and the hydroxyl on the surface of the current collector can be utilized, which further enhances the binding property of the battery binder and the current collector and is beneficial for maintaining the stability of the electrode plate structure of the battery in an extreme using environment.

In the present application, the first component may be 70 parts, 72 parts, 74 parts, 76 parts, 78 parts, 80 parts, 82 parts, 84 parts, 86 parts, 88 parts, 90 parts, or the like, in parts by weight.

The second component may be 10 parts, 12 parts, 14 parts, 16 parts, 18 parts, 20 parts, 22 parts, 24 parts, 26 parts, 28 parts, 30 parts, or the like, in parts by weight.

The following are preferred technical solutions of the present application, but they do not limit the technical solutions provided by the present application. The objects and beneficial effects of the present application can be better achieved by the following preferred technical solutions.

As a preferred technical solution of the present application, the sum of the first component and the second component in parts by weight is 100 parts.

Preferably, the ratio of the mass of the isocyanate to the sum of the mass of the first monomer and the second monomer is (0.05-1.60):1.00, e.g., 0.05:1.00, 0.10:1.00, 0.20:1.00, 0.40:1.00, 0.60:1.00, 0.80:1.00, 1.00:1.00, 1.20:1.00, 1.40:1.00, 1.60:1.00, or the like.

Preferably, the mass ratio of the first monomer to the second monomer is (0.2-1.0):1.0, e.g., 0.2:1.0, 0.3:1.0, 0.4:1.0, 0.5:1.0, 0.6:1.0, 0.7:1.0, 0.8:1.0, 0.9:1.0, 1.0:1.0, or the like.

In the present application, by controlling the mass ratio of the first monomer to the second monomer to be within a specific range, the prepared battery binder has a low swelling rate and a high binding capability. If the mass ratio of the first monomer to the second monomer is too small, namely the content of the second monomer is too large, the glass transition temperature of the prepared battery binder is too low. This is unfavorable for subsequent electrode plate processing and results in poor structural stability of the prepared electrode, and the long-term operational safety of the battery is poor. If the mass ratio of the first monomer to the second monomer is too large, namely the content of the first monomer is too large, the glass transition temperature of the prepared battery binder is too high. This results in low binding force and makes the prepared electrode plate brittle and thereby is unfavorable for the battery cycle.

As a preferred technical solution of the present application, the isocyanate is selected from an aromatic isocyanate and/or an aliphatic isocyanate.

Preferably, the aromatic isocyanate is selected from any one or a combination of at least two of 4,4'-diphenylmethane diisocyanate, a 4,4'-diphenylmethane diisocyanate polymer, toluene diisocyanate, a toluene diisocyanate polymer, xylylene diisocyanate, dimethyl biphenyl diisocyanate, *p*-phenylene diisocyanate, 1,5-naphthalene diisocyanate, or 3,3-dichlorobiphenyl-4,4-diisocyanate.

Preferably, the aliphatic isocyanate is selected from any one or a combination of at least two of tetramethylene diisocyanate, hexamethylene diisocyanate, dodecamethylene diisocyanate, trimethyl hexamethylene diisocyanate, isophorone diisocyanate, dicyclohexylmethane diisocyanate, or lysine diisocyanate.

Preferably, the aromatic dihydric phenol is selected from any one or a combination of at least two of *p*-dihydroxybenzene, *m*-dihydroxybenzene, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, or bis(4-hydroxyphenyl)diphenylmethane.

Preferably, the aromatic diamine is selected from any one or a combination of at least two of *p*-phenylenediamine, *m*-phenylenediamine, 3,5-diaminobenzoic acid, 4,4'-diaminodiphenyl ether, 3,4'-diaminodiphenyl ether, 4,4'-diaminobenzophenone, 4,4'-diaminodiphenyl sulfone, 3,3'-diaminodiphenyl sulfone, 4,4'-diaminobiphenyl, 4,4'-diaminodiphenylmethane, 4,4'-diamino-2,2'-dimethyl-1,1'-biphenyl, 4,4'-diaminobiphenyl-2,2'-dicarboxylic acid, 3,3',5,5'-tetramethylbenzidine, 4,4'-diaminooctafluorobiphenyl, 3,3-dichlorobenzidine, 2,7-diaminofluorene, 3,3'-dimethoxy-4,4'-diaminobiphenyl, 2,2-bis[4-(4-aminophenoxy)phenyl]propane, 2,2'-bis(trifluoromethyl)diaminobiphenyl, or 5-amino-2-(4-aminophenyl)benzimidazole.

To further reduce the swelling of the battery binder and improve the electrolyte resistance of the battery binder, an aromatic dihydric phenol or an aromatic diamine having a smaller molecular weight may be further preferably used as the first monomer.

Preferably, the first monomer is selected from any one or a combination of at least two of *p-*dihydroxybenzene, *m*-dihydroxybenzene, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, *p-*phenylenediamine, m-phenylenediamine, 3,5-diaminobenzoic acid, 4,4'-diaminodiphenyl ether, 3,4'-diaminodiphenyl ether, 4,4'-diaminobenzophenone, 4,4'-diaminodiphenyl sulfone, 3,3'-diaminodiphenyl sulfone, and 4,4'-diaminobiphenyl.

Preferably, the reactive long carbon chain polymer has an average molecular weight of 1000-10000, e.g., 1000, 2000, 3000, 4000, 5000, 6000, 7000, 8000, 9000, 10000, or the like.

Preferably, a reactive terminal group in the reactive long carbon chain polymer has a concentration of ≥ 200 mol/ton, e.g., 200 mol/ton, 250 mol/ton, 300 mol/ton, 350 mol/ton, 400 mol/ton, 450 mol/ton, 500 mol/ton, 550 mol/ton, 600 mol/ton, or the like.

To improve the reactivity of the reactive long carbon chain polymer, a reactive long carbon chain polymer having a small average molecular weight of ≤ 10000 and a concentration of a reactive terminal group (amino, hydroxyl, carboxyl, epoxy group, etc.) of ≥ 200 mol/ton is preferred.

Preferably, the reactive long carbon chain polymer comprises any one or a combination of at least two of epoxy-terminated polybutadiene, amine-terminated polybutadiene, hydroxyl-terminated polybutadiene, hydroxyl-terminated polyacrylonitrile, an amino-terminated butadiene-styrene copolymer, a hydroxyl-terminated butadiene-styrene copolymer, a carboxyl-terminated butadiene-acrylonitrile copolymer, an amino-terminated butadiene-acrylonitrile copolymer, a hydroxyl-terminated butadiene-acrylonitrile copolymer, an epoxy-terminated butadiene-acrylonitrile copolymer, or an epoxy-terminated styrene-butadiene-styrene triblock copolymer.

As a preferred technical solution of the present application, the acrylonitrile copolymer is selected from any one or a combination of at least two of a styrene-acrylonitrile copolymer, an acrylonitrile-butadiene-styrene copolymer, an acrylonitrile-methyl acrylate copolymer, an acrylonitrile-acrylamide copolymer, a methyl methacrylate-acrylonitrile copolymer, a vinyl acetate-acrylonitrile copolymer, or an acrylonitrile-butadiene-styrene-acrylamide copolymer, and is further preferably any one or a combination of at least two of a styrene-acrylonitrile copolymer, an acrylonitrile-methyl acrylate copolymer, an acrylonitrile-acrylamide copolymer, and a methyl methacrylate-acrylonitrile copolymer.

As a preferred technical solution of the present application, the battery binder further includes a conductive substance.

Preferably, the conductive substance is selected from any one or a combination of at least two of conductive carbon black, conductive graphite, modified conductive graphite, a metal particle, Ketjen black, carbon nanotube, carbon fiber, graphene, or a conductive polymer. In the present application, the use of the conductive substance can further improve the conductivity of the battery binder, improve the internal resistance of the battery and improve the performance of the battery cell.

Preferably, the conductive substance is 1-49 parts in parts by mass, e.g., 1 part, 5 parts, 10 parts, 15 parts, 20 parts, 25 parts, 30 parts, 35 parts, 40 parts, 45 parts, 49 parts, or the like, based on the sum of the first component and the second component being 100 parts in parts by weight.

It should be noted that, as long as the conductivity of the binder can be improved by compounding the conductive substance, there is no special requirement for the compounding manner and the technical process. For example, the conductive substance may be pretreated, and then the binder polymer may be grafted to the conductive substance by using a chemical reaction. More specifically, carbon nanotubes may be treated with an acid to obtain carboxylated carbon nanotubes, and then a binder polymer is grafted onto a conductive substance by a chemical reaction of an active group of the binder polymer with the carboxyl, such that the battery binder can include the conductive substance.

As a preferred technical solution of the present application, the battery binder has a dynamic viscosity of 10²-10⁵ mPa·s (e.g., 10² mPa·s, 5×10² mPa·s, 10³ mPa·s, 5×10³ mPa·s, 10⁴ mPa·s, 5×10⁴ mPa·s, or 10⁵ mPa·s), preferably 10³-10⁴ mPa·s.

In the present application, by controlling the dynamic viscosity of the battery binder to be within a specific range, the prepared battery binder has good uniformity. If the dynamic viscosity of the battery binder is too low, the prepared battery binder may result in subsidence of the battery slurry (used for coating on a current collector and preparing an electrode plate) prepared subsequently, and the uniformity of the coated electrode plate is poor. If the dynamic viscosity is too high, the prepared battery slurry may easily have local agglomerates that are difficult to disperse, or the solid content of the battery slurry is too low, the use amount of the solvent is increased, and the application cost is increased. Preferably, the battery binder has a glass transition temperature of -20 to 150 °C (e.g., - 20 °C, 0 °C, 10 °C, 20 °C, 50 °C, 70 °C, 90 °C, 100 °C, 120 °C, 140 °C, 150 °C, or the like), preferably 20-100 °C.

In the present application, the starting materials for preparing the battery binder are regulated and controlled, such that the battery binder has a proper glass transition temperature, and the infiltration capacity of the binder on the surface of a current collector is favorably improved, thereby improving the adhesion. If the glass transition temperature of the battery binder is too low, the structural stability of the prepared electrode easily deteriorates, and this is not favorable for the safety of the battery during long-term operation; if the glass transition temperature of the battery binder is too high, the modulus of the prepared electrode plate is high and the brittleness is increased, such that the active material layer of the electrode plate may easily experience powder drop and peeling during the winding process and thereby the yield of the battery cell is influenced.

In a second aspect, the present application provides a preparation method for the battery binder as described in the first aspect. The preparation method comprises the following steps:
(1) dissolving the first monomer in a solvent A to obtain a first monomer solution, and dissolving the second monomer in a solvent B to obtain a second monomer solution;
(2) adding the isocyanate to the second monomer solution obtained in step (1) for reaction to obtain a prepolymer solution;
(3) adding the first monomer solution obtained in step (1) to the prepolymer solution obtained in step (2) for reaction to obtain the first component; and
(4) mixing the first component and the second component for reaction to obtain the battery binder.

It should be noted that the isocyanate used in step (2) may be pure isocyanate or an isocyanate solution (obtained by dissolving the isocyanate in solvent C). The isocyanate solution has a mass concentration of 1% -100% (e.g., 1%, 5%, 10%, 20%, 30%, 40%, 50%, 60%, 70%, 80%, 90%, 99%, or the like), and when the cyanate ester solution has a mass concentration of 100%, pure isocyanate is used.

The first monomer solution has a mass concentration of 1%-50%, e.g., 1%, 5%, 10%, 15%, 20%, 25%, 30%, 35%, 40%, 45%, 50%, or the like.

The second monomer solution has a mass concentration of 1%-50%, e.g., 1%, 5%, 10%, 15%, 20%, 25%, 30%, 35%, 40%, 45%, 50%, or the like.

As a preferred technical solution of the present application, the solvent A and the solvent B are each independently selected from *N*-methylpyrrolidone and/or *N*,*N*-dimethylacetamide. Preferably, the solvent C is selected from *N*-methylpyrrolidone and/or *N*,*N-*dimethylacetamide.

Preferably, the reaction temperature in step (2) is 50-80 °C, e.g., 50 °C, 52 °C, 55 °C, 57 °C, 60 °C, 63 °C, 66 °C, 68 °C, 70 °C, 72 °C, 75 °C, 77 °C, 80 °C, or the like.

Preferably, the reaction time in step (2) is 60-360 min, e.g., 60 min, 120 min, 180 min, 240 min, 300 min, 360 min, or the like.

Preferably, the reaction temperature in step (3) is 60-120 °C, e.g., 60 °C, 70 °C, 80 °C, 90 °C, 100 °C, 110 °C, 120 °C, or the like.

Preferably, the reaction time in step (3) is 120-480 min, e.g., 120 min, 180 min, 240 min, 300 min, 360 min, 420 min, 480 min, or the like.

It should be noted that in the present application, the adding described in step (2) and step (3) is to add dropwise under stirring. In the present application, no special requirement is made on the dripping speed, and in the present application, the isocyanate solution is gradually added dropwise into the second monomer solution, and if the dripping speed is high, the stirring speed in the dripping process can be increased. Meanwhile, to improve the reactivity of the prepolymer obtained in the second step and thereby allow the prepolymer to better participate in the next reaction and enable easier acquisition of a battery binder with proper viscosity, the concentration of isocyanate group serving as molecular chain end in the prepolymer can be further improved. In the present application, the isocyanate group serving as the molecular chain end in the prepolymer has a mass concentration of ≥ 1.5%, e.g., 1.5%, 2%, 3%, 4%, 6%, 8%, 10%, 12%, or the like. The concentration of isocyanate group can be measured using ASTM D2572.

Meanwhile, it should be noted that, to further increase the molecular weight and improve the electrolyte resistance of the battery binder, in the reaction process of step (3), an organic small molecule chain extender may be added, and the organic small molecule chain extender has a mass percentage of 0.5%-5.0%, e.g., 0.5%, 1.0%, 2.0%, 3.0%, 4.0%, 5%, or the like, based on the total mass of solids (the sum of mass of the isocyanate, the first monomer, and the second monomer) in the first component being 100%. In the present application, there is no special limit on the types of the organic small molecule chain extender, and all the organic small molecule chain extenders capable of reacting with isocyanate group are suitable. From the viewpoint of further reducing the swelling rate of the battery binder and improving the electrolyte resistance of the battery binder, the organic small molecule chain extender is preferably a dibasic acid anhydride chain extender, which, by way of example and without limitation, includes any one or a combination of at least two of pyromellitic dianhydride, biphenyl tetracarboxylic dianhydride, diphenyl ether tetracarboxylic dianhydride, and benzophenone tetracarboxylic dianhydride.

In a third aspect, the present application provides a battery electrode plate. The battery electrode plate comprises the battery binder as described in the first aspect.

Preferably, the battery electrode plate is a positive electrode plate or a negative electrode plate.

When the battery binder provided by the present application is applied to a battery electrode plate, the manufacturing process for the battery electrode plate is not limited at all.By way of example and without limitation, the manufacturing process includes a wet mixing process, a semi-dry mixing process, or a dry mixing process. Materials such as a battery binder, an active material, a conductive agent and a solvent are well mixed to obtain an electrode slurry, then the slurry is uniformly applied on a current collector by a coating machine, and then drying, calendering, slitting, and the like were performed to obtain the battery electrode plate. It should be noted that because the battery binder provided by the present application has good electrolyte resistance and excellent performance stability in an electrolyte, the battery binder provided by the present application can be applied to a battery positive electrode material in practical applications. Meanwhile, the battery binder can also be applied to other application fields involving contacting with the electrolyte, such as a positive electrode edge, a positive electrode substrate, a negative electrode material, a negative electrode edge, a negative electrode substrate, and a separator.

When the battery binder provided by the present application is applied to the positive electrode plate and the negative electrode plate of a battery, the type of the active substance selected for the positive electrode plate or the negative electrode plate is not particularly limited, and the particle size of the active substance is not particularly limited either. By way of example and without limitation, the positive electrode active substance employed includes one or a combination of two or more of lithium iron phosphorus oxide, lithium cobalt oxide, lithium nickel oxide, lithium manganese oxide, lithium iron oxide, lithium nickel manganese oxide, lithium cobalt nickel oxide, lithium nickel cobalt manganese oxide, lithium nickel cobalt aluminum oxide, and composites thereof. By way of example and without limitation, the negative electrode active substance employed includes any one or a combination of at least two of carbon/silicon material, metal, and metal oxide; the carbon/silicon material is selected from any one or a combination of at least two of natural graphite, artificial graphite, amorphous carbon, diamond-like carbon, carbon nanotube, carbon/silicon hybrid material, silicon oxide, and silicon; by way of example and without limitation, the metal includes one or a metal alloy of at least two of lithium, aluminum, tin, silver, zinc, calcium, barium, mercury, platinum, technetium, bismuth, and indium; by way of example and without limitation, the metal oxide includes one or a combination of at least two of aluminum oxide, tin oxide, indium oxide, zinc oxide, and lithium oxide.

In a fourth aspect, the present application further provides a lithium-ion battery. The lithium-ion battery comprises the battery electrode plate as described in the third aspect. Compared with the prior art, the present application has the following beneficial effects:
In the present application, by designing the components of the battery binder, controlling the content of the first component and the second component to be within a specific range, and controlling the mass ratio of the first monomer to the second monomer in the first component to be within a specific range as well, the prepared battery binder has proper dynamic viscosity and glass transition temperature and also has strong binding strength and electric properties. The electrode plate prepared using the battery binder can keep good integrity after being soaked in the electrolyte at 70 °C for 7 days, and the surface of the electrode plate will not show large-area peeling or cracking, with the peel strength of the electrode plate being 0.8-9.5 N/m. The first charge and discharge efficiency of the lithium-ion battery prepared using the electrode plate is > 90%, specifically 91.7%-94.2%, and the capacity retention rate after 500 cycles is 87.2%-94.5%.

### BRIEF DESCRIPTION OF THE DRAWINGS

The accompanying drawings are used to provide a further understanding of the technical solutions herein and form part of the specification, which are used in conjunction with the embodiments of the present application to explain the technical solutions herein, without constituting a limitation of the technical solutions herein.
FIG. 1 is an image characterizing test results of the electrode plate electrolyte resistance test performed on an electrode plate prepared using the battery binder provided in Example 1 of the present application;
FIG. 2 is an image characterizing test results of the electrode plate electrolyte resistance test performed on an electrode plate prepared using the battery binder provided in Example 11 of the present application; and
FIG. 3 is an image characterizing test results of the electrode plate electrolyte resistance test performed on an electrode plate prepared using the battery binder provided in Comparative Example 6 of the present application.

### DETAILED DESCRIPTION OF THE EMBODIMENTS

The technical solutions of the present application are further illustrated below with reference to the drawings and based on specific embodiments. It will be appreciated by those skilled in the art that the examples are only intended to help understand the present application and should not be construed as specific limitations to the present application.

It should be noted that the components used in the following examples and comparative examples were commercially available.

Some components in the examples and comparative examples are illustrated below:
4,4'-diphenylmethane diisocyanate polymer: the isocyanate group has a mass percentage of 30%;
Toluene diisocyanate polymer: the isocyanate group has a mass percentage of 30%;
Epoxy-terminated butadiene-acrylonitrile copolymer 1: the epoxy group has a content of 600 mol/ton, and the cyano has a mass percentage of 15%;
Epoxy-terminated butadiene-acrylonitrile copolymer 2: the epoxy group has a content of 400 mol/ton, and the cyano has a mass percentage of 15%;
Epoxy-terminated butadiene-acrylonitrile copolymer 3: the epoxy group has a content of 150 mol/ton, and the cyano has a mass percentage of 15%;
Hydroxyl-terminated butadiene-styrene copolymer; the hydroxyl has a content of 200 mol/ton, and the phenyl has a mass percentage of 15%;
Amino-terminated butadiene-acrylonitrile copolymer: the amino has a content of 600 mol/ton, and the cyano has a mass percentage of 15%;
Hydroxyl-terminated polyacrylonitrile: the hydroxyl has a content of 600 mol/ton, and the cyano has a mass percentage of 53%;
Amino-terminated styrene-butadiene-styrene terpolymer: the amino has a content of 600 mol/ton, and the phenyl has a mass percentage of 15%;
Carboxyl-terminated butadiene-styrene copolymer: the carboxyl has a content of 600 mol/ton, and the phenyl has a mass percentage of 15%;
Acrylonitrile-acrylamide copolymer: the mass average molecular weight is 150,000-200,000, and the cyano has a mass percentage of 15%;
Methyl methacrylate-acrylonitrile copolymer: the mass average molecular weight is 150,000-200,000, and the cyano has a mass percentage of 15%;
Styrene-acrylonitrile copolymer: the mass average molecular weight is 150,000-200,000, and the cyano has a mass percentage of 15%;
Acrylonitrile-methyl acrylate copolymer: the mass average molecular weight is 150,000 to 200,000, and the cyano has a mass percentage of 15%.

### Example 1

This example provides a battery binder, which comprises the following components in parts by weight: a first component and a second component;
starting materials for preparing the first component include 263 g of 4,4'-diphenylmethane diisocyanate polymer, 98 g of p-dihydroxybenzene, and 359 g of epoxy-terminated butadiene-acrylonitrile copolymer 1 (content of epoxy group: 600 mol/ton);
the second component is 180 g of an acrylonitrile-acrylamide copolymer.

The preparation method for the battery binder described above comprises the following steps:
(1) 263 g of 4,4'-diphenylmethane diisocyanate polymer was dissolved in 789 g of N-methylpyrrolidone to obtain an isocyanate solution;
   98 g of p-dihydroxybenzene was dissolved in 294 g of N-methylpyrrolidone to obtain a first monomer solution;
   359 g of epoxy-terminated butadiene-acrylonitrile copolymer 1 (content of epoxy group: 600 mol/ton) was dissolved in 1077 g of N-methylpyrrolidone to obtain a second monomer solution;
(2) The second monomer solution obtained in step (1) was added to a 10 L glass reaction kettle equipped with a polytetrafluoroethylene stirrer; the temperature of the reaction kettle was set to 80 °C, and the stirring speed was set to 400 r/min; the isocyanate solution prepared in step (1) was then added to the reactor using a peristaltic pump over 60 min, and then the mixture was allowed to react at a constant temperature for 300 min to obtain a prepolymer solution;
(3) The temperature of the reaction kettle was adjusted to 90 °C, and the stirring speed was kept at 400 r/min; the first monomer solution obtained in step (1) was added to the reactor using a peristaltic pump over 60 min, and then the mixture was allowed to react at a constant temperature for 300 min to obtain the first component;
(4) 180 g of acrylonitrile-acrylamide copolymer was added to the reaction kettle, and the materials were mixed and reacted at 60 °C for 60 min, and then N-methylpyrrolidone was added to adjust the solid content to 10%, thus obtaining the battery binder.

### Example 2

This example provides a battery binder. It differs from Example 1 only in that the 4,4'-diphenylmethane diisocyanate polymer is replaced with 4,4'-diphenylmethane diisocyanate and the epoxy-terminated butadiene-acrylonitrile copolymer 1 is replaced with an amino-terminated butadiene-acrylonitrile copolymer, and the other conditions are the same as Example 1.

### Example 3

This example provides a battery binder. It differs from Example 1 only in that 263 g of 4,4'-diphenylmethane diisocyanate polymer is replaced with 263 g of 4,4'-diphenylmethane diisocyanate, 98 g of *p*-dihydroxybenzene is replaced with 103 g of *p*-dihydroxybenzene, and 180 g of acrylonitrile-acrylamide copolymer is replaced with 206 g of acrylonitrile-acrylamide copolymer, and the other conditions are the same as Example 1.

### Example 4

This example provides a battery binder. It differs from Example 1 only in that *p-*dihydroxybenzene is replaced with *p*-phenylenediamine and the reaction temperature in step (3) is 60 °C, and the other conditions are the same as Example 1.

### Example 5

This example provides a battery binder. It differs from Example 1 only in that the epoxy-terminated butadiene-acrylonitrile copolymer 1 is replaced with hydroxyl-terminated polyacrylonitrile and the acrylonitrile-acrylamide copolymer is replaced with a methyl methacrylate-acrylonitrile copolymer, and the other conditions are the same as Example 1.

### Example 6

This example provides a battery binder. It differs from Example 1 only in that *p-*dihydroxybenzene is replaced with 3,5-diaminobenzoic acid, and the epoxy-terminated butadiene-acrylonitrile copolymer 1 (content of epoxy group: 600 mol/ton) is replaced with an epoxy-terminated butadiene-acrylonitrile copolymer 2 (content of epoxy group: 400 mol/ton), and the other conditions are the same as Example 1.

### Example 7

This example provides a battery binder. It differs from Example 1 only in that the 4,4'-diphenylmethane diisocyanate polymer is replaced with a toluene diisocyanate polymer and the epoxy-terminated butadiene-acrylonitrile copolymer 1 is replaced with an amino-terminated styrene-butadiene-styrene terpolymer, and the other conditions are the same as Example 1.

### Example 8

This example provides a battery binder. It differs from Example 1 only in that the 4,4'-diphenylmethane diisocyanate polymer is replaced with toluene diisocyanate, *p-*dihydroxybenzene is replaced with bis-(4-hydroxyphenyl)sulfide, and the acrylonitrile-acrylamide copolymer is replaced with a styrene-acrylonitrile copolymer, and the other conditions are the same as Example 1.

### Example 9

This example provides a battery binder. It differs from Example 1 only in that the 4,4'-diphenylmethane diisocyanate polymer is replaced with a toluene diisocyanate polymer and *p*-dihydroxybenzene is replaced with 4,4'-diaminobenzophenone, and the other conditions are the same as Example 1.

### Example 10

This example provides a battery binder. It differs from Example 1 only in that *p-*dihydroxybenzene is replaced with p-phenylenediamine and the epoxy-terminated butadiene-acrylonitrile copolymer 1 is replaced with a hydroxyl-terminated butadiene-styrene copolymer 3 (content of hydroxyl: 200 mol/ton), and the other conditions are the same as Example 1.

### Example 11

This example provides a battery binder. It differs from Example 1 only in that p-dihydroxybenzene is replaced with 4,4'-diaminodiphenylmethane, the epoxy-terminated butadiene-acrylonitrile copolymer 1 is replaced with a carboxyl-terminated butadiene-styrene copolymer, and 180 g of acrylonitrile-acrylamide copolymer is replaced with 308 g of methyl methacrylate-acrylonitrile copolymer, and the other conditions are the same as Example 1.

### Example 12

This example provides a battery binder. It differs from Example 1 only in that *p-*dihydroxybenzene is replaced with 4,4'-diaminodiphenyl ether and 180 g of acrylonitrile-acrylamide copolymer is replaced with 80 g of acrylonitrile-methyl acrylate copolymer, and the other conditions are the same as Example 1.

### Example 13

This example provides a battery binder. It differs from Example 1 only in that the content of the acrylonitrile-acrylamide copolymer in the battery binder is 308 g, and the other conditions are the same as Example 1.

### Example 14

This example provides a battery binder. It differs from Example 1 only in that the content of the acrylonitrile-acrylamide copolymer in the battery binder is 80 g, and the other conditions are the same as Example 1.

### Example 15

This example provides a battery binder. It differs from Example 1 only in that the content of *p*-dihydroxybenzene in the first component is 72 g, and the other conditions are the same as Example 1.

### Example 16

This example provides a battery binder. It differs from Example 1 only in that the content of the epoxy-terminated butadiene-acrylonitrile copolymer 1 in the first component is 98 g, and the other conditions are the same as Example 1.

### Example 17

This example provides a battery binder. It differs from Example 1 only in that the battery binder further comprises 150 g of conductive carbon black, and the other conditions are the same as Example 1.

### Example 18

This comparative example provides a battery binder. It differs from Example 1 only in that the epoxy-terminated butadiene-acrylonitrile copolymer 1 (content of epoxy group: 600 mol/ton) is replaced with an epoxy-terminated butadiene-acrylonitrile copolymer 3 (content of epoxy group: 150 mol/ton), and the other conditions are the same as Example 1.

### Example 19

This comparative example provides a battery binder. It differs from Example 1 only in that the 4,4'-diphenylmethane diisocyanate polymer is replaced with a toluene diisocyanate polymer and *p*-dihydroxybenzene is replaced with 2,2-bis[4-(4-aminophenoxy)phenyl]propane, and the other conditions are the same as Example 1.

### Example 20

This example provides a battery binder. It differs from Example 1 only in that the amount of *p*-dihydroxybenzene added is adjusted to 106 g and the amount of the epoxy-terminated butadiene-acrylonitrile copolymer 1 added is adjusted to 106 g, and other implementation conditions are the same as Example 1.

### Comparative Example 1

This comparative example provides a battery binder. It differs from Example 1 only in that the content of the acrylonitrile-acrylamide copolymer in the battery binder is 480 g, and the other conditions are the same as Example 1.

### Comparative Example 2

This comparative example provides a battery binder. It differs from Example 1 only in that the content of the acrylonitrile-acrylamide copolymer in the battery binder is 50 g, and the other conditions are the same as Example 1.

### Comparative Example 3

This comparative example provides a battery binder. It differs from Example 1 only in that the content of *p*-dihydroxybenzene in the first component is 40 g, and the other conditions are the same as Example 1.

### Comparative Example 4

This comparative example provides a battery binder. It differs from Example 1 only in that the content of the epoxy-terminated butadiene-acrylonitrile copolymer 1 in the first component is 70 g, and the other conditions are the same as Example 1.

### Comparative Example 5

This comparative example provides a battery binder. It differs from Example 1 only in that *p-*dihydroxybenzene is replaced with 1,4-bis(2-hydroxyethyl)benzene, and the other conditions are the same as Example 1.

### Comparative Example 6

This comparative example provides a battery binder. It differs from Example 1 only in that *p-*dihydroxybenzene is used in an amount of 110 g in the starting materials for preparing the first component and the epoxy-terminated butadiene-acrylonitrile copolymer 1 is not contained in the starting materials for preparing the first component, and the other conditions are the same as Example 1.

### Comparative Example 7

This comparative example provides a battery binder, which is PVDF (model: KYNAR HSV 900) manufactured by Arkema in France.

The battery binders prepared in Examples 1-19 and Comparative examples 1-7 were added to a battery electrode plate formulation to prepare electrode plates by the following method: 95 parts of lithium iron phosphate (Dynanonic, model: DY-3), 2.5 parts of conductive carbon black Super P, and 2.5 parts of battery binder (in parts by weight) were added to *N-*methylpyrrolidone according to a mass percentage of the total solid components of 65%, and the materials were mixed by a double planetary mixer to obtain an electrode slurry containing the prepared battery binder. The uniformly dispersed slurry was filtered through a 100-mesh sieve and applied on an aluminum foil with a thickness of 10 µm through an extrusion coating machine, and the aluminum foil was dried through a 110 °C air-blowing drying channel and then subjected to calendering at a load per unit length of 1×10⁴ N/m to obtain a positive electrode plate.

The test methods for the battery binder and the electrode plate prepared using the battery binder described above are as follows:
Glass transition temperature test: measured by using an MDSC2910 differential scanning calorimetry (DSC) instrument from TA, USA;
Dynamic viscosity test: the dynamic viscosity was measured by using an NDJ-8S digital rotary viscometer produced by Shanghai Fangrui Instrument Co., Ltd.;
Electrolyte resistance test of the electrode plate: the prepared electrode plate was cut into sample strips of 700 mm × 50 mm, and the sample strips were soaked in a prepared electrolyte (ethylene carbonate:dimethyl carbonate:diethyl carbonate = 1:1:1 (mass ratio) and the concentration of LiPF₆ was 1.0M) at 70 °C for 7 days in a sealed manner, and then the sample strips were taken out for observation of the surface state of the electrode plate, with the intact electrode plate marked as ∘, the electrode plate with a small part of peeled off film layer marked as □, and the electrode plate with large-area peeling or cracking marked as ×.
Peel strength test of the electrode plate: the electrode plate soaked by the electrolyte was cut into sample strips of 100 mm × 20 mm, the current collector side was fixed on a steel plate with a thickness of 1 mm by using a double-sided adhesive tape, and a transparent adhesive tape was applied on the coating layer side; a 180-degree peel test was conducted at 25 °C using an electronic universal testing machine at a peel rate of 100 mm/min, and the peel stress was recorded;
Battery performance test: a 1.2 Ah pouch cell was manufactured using the electrode plate, the first charge and discharge efficiency of the pouch cell was tested, and the cycle performance was tested; the test steps are as follows:
   (1) The pouch cell prepared above was subjected to formation and capacity grading at 25 °C using a battery test cabinet, wherein:
      for the formation step, the pouch cell was charged at a constant current of 0.05 C for 2.0 h and then at a constant current of 0.15 C for 2.5 h;
      for the capacity grading step, the pouch cell was charged to 3.7 V at a constant current of 0.33 C, charged to a cut-off current of 0.02 C at a constant voltage of 3.7 V, and then discharged to 2 V at 0.33 C; the total electric quantity charged in the formation step and the capacity grading step and the discharge capacity after discharging were recorded;
      first charge and discharge efficiency (%) = discharge capacity after discharging in the capacity grading step / total electric quantity charged in the formation step and the capacity grading step;
      capacity retention rate after 500 cycles: at 25 °C, the battery after formation and capacity grading was charged to 3.7 V at a constant current of 0.33 C, then charged to a cut-off current of 0.02 C at a constant voltage, left to stand for 5 min, discharged to 2 V at 0.33 C, and then left to stand for 5 min, and the discharge capacity after the first charging and discharging was recorded;
      then the battery was charged to 3.7 V at a constant current of 0.5 C, charged to a cut-off current of 0.02 C at a constant voltage, left to stand for 5 min, discharged to 2 V at 0.5 C, and then left to stand for 5 min; the above charging/discharging process was repeated, and after 500 cycles were completed, the discharge capacity after the 500^{th} cycle was recorded; The capacity retention rate of the battery after 500 cycles was calculated using the following formula: capacity retention rate after 500 cycles (%) = discharge capacity after the 500^{th} cycle / discharge capacity after the first cycle.

The results of the performance tests on the above battery binders and the electrode plates prepared using the battery binders are shown in Table 1.

**Table 1**

| | Battery binder and characteristics | | Electrode plate and battery performance | | | |
|---|---|---|---|---|---|---|
| | Dynamic viscosity/m Pa·s | Glass transition temperatur e/°C | Electrol yte resistan ce | Peel strength of electrode plate after being soaked in electrolyte/N·m⁻¹ | First charge and discharge efficiency/ % | Capacity retention rate after 500 cycles/% |
| Example 1 | 10000 | 45 | ○ | 8.5 | 92.5 | 92.5 |
| Example 2 | 4600 | 40 | □ | 1.8 | 92.3 | 88.6 |
| Example 3 | 5200 | 80 | □ | 1.1 | 92.1 | 88.5 |
| Example 4 | 8000 | 43 | ○ | 6.3 | 92.8 | 90.6 |
| Example 5 | 7500 | 40 | ○ | 9.5 | 93.1 | 94.5 |
| Example 6 | 3200 | 41 | ○ | 7.2 | 92.5 | 93.8 |
| Example 7 | 9500 | 45 | ○ | 6.2 | 91.7 | 91.2 |
| Example 8 | 7600 | 36 | □ | 2.1 | 91.8 | 89.6 |
| Example 9 | 12200 | 46 | ○ | 5.3 | 92.1 | 90.3 |
| Example 10 | 5000 | 48 | □ | 1.2 | 92.1 | 87.2 |
| Example 11 | 18900 | 42 | □ | 3.5 | 91.9 | 89.5 |
| Example 12 | 6900 | 41 | ○ | 5.5 | 92.6 | 91.3 |
| Example 13 | 11500 | 40 | ○ | 8.4 | 92.2 | 91.5 |
| Example 14 | 9200 | 48 | ○ | 6.5 | 92.1 | 90.2 |
| Example 15 | 8500 | 40 | ○ | 8.8 | 92.3 | 91.5 |
| Example 16 | 15000 | 95 | □ | 0.8 | 92.0 | 88.1 |
| Example 17 | 25300 | 45 | ○ | 8.4 | 94.2 | 92.6 |
| Example 18 | 4300 | 55 | ○ | Large-area peeling | 91.5 | 83.5 |
| Example 19 | 10500 | 38 | ○ | 4.5 | 92.5 | 90.1 |
| Example 20 | 4700 | 85 | □ | 1.2 | 92.0 | 88.1 |
| Comparati ve Example 1 | 23000 | 40 | × | Large-area peeling | 92.3 | 84.0 |
| Comparative Example 2 | 6600 | 49 | × | Large-area peeling | 92.0 | 83.1 |
| Comparati ve Example 3 | 6500 | 35 | × | Large-area cracking | 91.7 | 82.3 |
| Comparati ve Example 4 | 22300 | 98 | × | Large-area peeling | 91.8 | 83.3 |
| Comparati ve Example 5 | 6350 | 18 | × | Large-area cracking | 91.5 | 81.0 |
| Comparati ve Example 6 | 13100 | 153 | × | Large-area peeling | 92.2 | 82.3 |
| Comparati ve Example 7 | 15000 | -30 | × | Large-area peeling | 92.5 | 86.5 |

The data in Table 1 show that in the present application, by designing the components of the battery binder, controlling the content of the first component and the second component to be within a specific range, and controlling the mass ratio of the first monomer to the second monomer in the first component to be within a specific range as well, the prepared battery binder had proper dynamic viscosity and glass transition temperature and also had strong binding strength and electric properties. The electrode plate prepared using the battery binder could keep good integrity after being soaked in the electrolyte at 70 °C for 7 days, and the surface of the electrode plate did not show large-area peeling or cracking, with the peel strength of the electrode plate being 0.8-9.5 N/m. The first charge and discharge efficiency of the lithium-ion battery prepared using the electrode plate was > 90%, specifically 91.7%-94.2%, and the capacity retention rate after 500 cycles was 87.2%-94.5%.

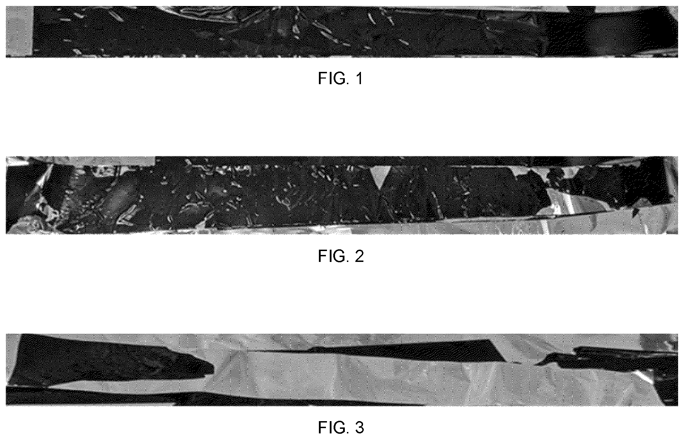

The results for the electrolyte resistance tests of the electrode plates prepared by using the battery binders provided in Example 1, Example 11, and Comparative Example 6 are shown in FIGs. 1-3. As can be seen from FIGs. 1-3, in the present application, by designing the components of the battery binders (Example 1 and Example 11), the prepared battery binders had strong binding property, such that the electrode plates prepared using the binders had good electrolyte resistance, and the surfaces of the electrode plates could be basically kept intact without large-area peeling after the electrode plates were soaked in the electrolyte at 70 °C for 7 days. If the first component did not contain the second monomer (Comparative Example 6, FIG. 3), the prepared electrode plate had poor electrolyte resistance, and the electrode plate experienced large-scale peeling after being soaked in the electrolyte at 70 °C for 7 days.

Compared with Example 1, if the concentration of the reactive terminal group in the second monomer was too low (Example 18), the performance of the prepared battery binder was poor, and the electrode plate prepared using the binder was poor in peel strength after being soaked in the electrolyte and experienced large-area peeling.

Compared with Example 1, if the content of the first component was too small (Comparative Example 1) or the content of the first component was too large (Comparative Example 2), both the electrolyte resistance and peel strength of the prepared battery binders were poor. Compared with Example 1, for the starting materials for preparing the first component, if the mass ratio of the first monomer to the second monomer was too small (Comparative Example 3) or the mass ratio of the first monomer to the second monomer was too large (Comparative Example 4), the performance of the prepared battery binders was also poor, and the electric properties of the lithium-ion batteries prepared using the binders were poor. Compared with Example 1, if the aromatic diol was selected as the first monomer (Comparative Example 5), the prepared battery binder had poor performance, and the lithium-ion battery prepared using the battery binder also had poor electric properties; if the second monomer was not contained in the starting materials for preparing the first component (Comparative Example 6), the performance of the prepared battery binder was poor; if a commercially available battery binder was used (Comparative Example 7), the adhesion was poor.

In summary, in the present application, by designing the components of the battery binder, controlling the content of the first component and the second component to be within a specific range, and controlling the mass ratio of the first monomer to the second monomer in the first component to be within a specific range as well, the prepared battery binder has proper dynamic viscosity and glass transition temperature and also has strong binding strength and electric properties.

The applicant declares that in the present application, the examples above are used to describe the detailed process flow of the present application, but the present application is not limited to the detailed process flow above, that is, it does not mean that the present application is not necessarily implemented as per the detailed process flow above. It will be appreciated by those skilled in the art that any modifications to the present application, equivalent substitutions of the starting materials of the product of the present application and the addition of auxiliary components, selections of specific modes, etc., are within the scope and disclosure of the present application.

## Claims

1. A battery binder, comprising the following components in parts by weight: 70 to 90 parts of a first component and 10 to 30 parts of a second component, wherein
starting materials for preparing the first component comprise isocyanate, a first monomer, and a second monomer;
the first monomer is selected from an aromatic dihydric phenol and/or an aromatic diamine; the second monomer is a reactive long carbon chain polymer;
the second component is an acrylonitrile copolymer.

2. The battery binder according to claim 1, wherein the sum of the first component and the second component in parts by weight is 100 parts.

3. The battery binder according to claim 1 or 2, wherein the ratio of the mass of the isocyanate to the sum of the mass of the first monomer and the second monomer is (0.05-1.60):1.00.

4. The battery binder according to any one of claims 1 to 3, wherein the mass ratio of the first monomer to the second monomer is (0.2-1.0):1.0.

5. The battery binder according to any one of claims 1 to 4, wherein the isocyanate is selected from an aromatic isocyanate and/or an aliphatic isocyanate;
preferably, the aromatic isocyanate is selected from any one or a combination of at least two of 4,4'-diphenylmethane diisocyanate, a 4,4'-diphenylmethane diisocyanate polymer, toluene diisocyanate, a toluene diisocyanate polymer, xylylene diisocyanate, dimethyl biphenyl diisocyanate, *p*-phenylene diisocyanate, 1,5-naphthalene diisocyanate, or 3,3-dichlorobiphenyl-4,4-diisocyanate;
preferably, the aliphatic isocyanate is selected from any one or a combination of at least two of tetramethylene diisocyanate, hexamethylene diisocyanate, dodecamethylene diisocyanate, trimethyl hexamethylene diisocyanate, isophorone diisocyanate, dicyclohexylmethane diisocyanate, or lysine diisocyanate;
preferably, the aromatic dihydric phenol is selected from any one or a combination of at least two of *p*-dihydroxybenzene, *m*-dihydroxybenzene, bis(4-hydroxyphenyl)methane, bis(4-hydroxyphenyl)ether, bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3-chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, or bis(4-hydroxyphenyl)diphenylmethane;
preferably, the aromatic diamine is selected from any one or a combination of at least two of *p*-phenylenediamine, *m*-phenylenediamine, 3,5-diaminobenzoic acid, 4,4'-diaminodiphenyl ether, 3,4'-diaminodiphenyl ether, 4,4'-diaminobenzophenone, 4,4'-diaminodiphenyl sulfone, 3,3'-diaminodiphenyl sulfone, 4,4'-diaminobiphenyl, 4,4'-diaminodiphenylmethane, 4,4'-diamino-2,2'-dimethyl-1,1'-biphenyl, 4,4'-diaminobiphenyl-2,2'-dicarboxylic acid, 3,3',5,5'-tetramethylbenzidine, 4,4'-diaminooctafluorobiphenyl, 3,3-dichlorobenzidine, 2,7-diaminofluorene, 3,3'-dimethoxy-4,4'-diaminobiphenyl, 2,2-bis[4-(4-aminophenoxy)phenyl]propane, 2,2'-bis(trifluoromethyl)diaminobiphenyl, or 5-amino-2-(4-aminophenyl)benzimidazole;
preferably, the reactive long carbon chain polymer has an average molecular weight of 1000-10000;
preferably, a reactive terminal group in the reactive long carbon chain polymer has a concentration of ≥ 200 mol/ton;
preferably, the reactive long carbon chain polymer comprises any one or a combination of at least two of epoxy-terminated polybutadiene, amine-terminated polybutadiene, hydroxyl-terminated polybutadiene, hydroxyl-terminated polyacrylonitrile, an amino-terminated butadiene-styrene copolymer, a hydroxyl-terminated butadiene-styrene copolymer, a carboxyl-terminated butadiene-acrylonitrile copolymer, an amino-terminated butadiene-acrylonitrile copolymer, a hydroxyl-terminated butadiene-acrylonitrile copolymer, an epoxy-terminated butadiene-acrylonitrile copolymer, or an epoxy-terminated styrene-butadiene-styrene triblock copolymer.

6. The battery binder according to any one of claims 1 to 5, wherein the acrylonitrile copolymer is selected from any one or a combination of at least two of a styrene-acrylonitrile copolymer, an acrylonitrile-butadiene-styrene copolymer, an acrylonitrile-methyl acrylate copolymer, an acrylonitrile-acrylamide copolymer, a methyl methacrylate-acrylonitrile copolymer, a vinyl acetate-acrylonitrile copolymer, or an acrylonitrile-butadiene-styrene-acrylamide copolymer, and is further preferably any one or a combination of at least two of a styrene-acrylonitrile copolymer, an acrylonitrile-methyl acrylate copolymer, an acrylonitrile-acrylamide copolymer, and a methyl methacrylate-acrylonitrile copolymer.

7. The battery binder according to any one of claims 1 to 6, further comprising a conductive substance, wherein
preferably, the conductive substance is selected from any one or a combination of at least two of conductive carbon black, conductive graphite, modified conductive graphite, a metal particle, Ketjen black, carbon nanotube, carbon fiber, graphene, or a conductive polymer;
preferably, the conductive substance is 1 to 49 parts in parts by mass based on the sum of the first component and the second component being 100 parts in parts by weight.

8. The battery binder according to any one of claims 1 to 7, wherein the battery binder has a dynamic viscosity of 10²-10⁵ mPa·s, preferably 10³-10⁴ mPa·s;
and preferably, the battery binder has a glass transition temperature of -20 to 150 °C, preferably 20-100 °C.

9. A preparation method for the battery binder according to any one of claims 1 to 8, comprising the following steps:
(1) dissolving the first monomer in a solvent A to obtain a first monomer solution, and dissolving the second monomer in a solvent B to obtain a second monomer solution;
(2) adding the isocyanate to the second monomer solution obtained in step (1) for reaction to obtain a prepolymer solution;
(3) adding the first monomer solution obtained in step (1) to the prepolymer solution obtained in step (2) for reaction to obtain the first component; and
(4) mixing the first component and the second component for reaction to obtain the battery binder.

10. The preparation method according to claim 8, wherein the solvent A and the solvent B are each independently selected from N-methylpyrrolidone and/or *N*,*N*-dimethylacetamide.

11. The preparation method according to claim 9 or 10, wherein the reaction temperature in step (2) is 50-80 °C.

12. The preparation method according to any one of claims 9 to 11, wherein the reaction time in step (2) is 60-360 min;
preferably, the reaction temperature in step (3) is 60-120 °C;
preferably, the reaction time in step (3) is 120-480 min.

13. A battery electrode plate, comprising the battery binder according to any one of claims 1 to 8.

14. The battery electrode plate according to claim 13, wherein the battery electrode plate is a positive electrode plate or a negative electrode plate.

15. A lithium-ion battery, comprising the battery electrode plate according to claim 13 or 14.
